# EUROPÄISCHE PATENTSCHRIFT

(11) **EP 0 622 029 B1**
(45) Veröffentlichungstag und Bekanntmachung des Hinweises auf die Patenterteilung: **30.05.2001**
(21) Anmeldenummer: 94104348.1
(22) Anmeldetag: 19.03.1994
(51) Int. Cl.: A23P 1/00, A23L 1/03, A23L 1/23, A23P 1/04

(54) **Verfahren zur Herstellung von Lebensmitteln**
Process for preparing a foodstuff
Procédé de préparation d'aliment

(30) Priorität: 30.03.1993 DE 4310283
(43) Veröffentlichungstag der Anmeldung: 02.11.1994
(73) Patentinhaber: CHEMOSOL AG, CH-4002 Basel (CH)
(72) Erfinder: Vösgen, Walter, Dr., D-55278 Dexheim (DE)
(74) Vertreter: Nix, Frank Arnold, Dr.

(56) Entgegenhaltungen:
- EP-A- 0 444 439
- DE-A- 2 557 927
- DE-A- 3 738 599
- FR-A- 2 448 567
- US-A- 3 725 085
- Wahring, Deutsches Wörterbuch, ISBN 3-570-03648-0, Seite 1073
- Römpp Lexikon, Lebensmittelchemie, ISBN 3-13-736601-1, Seite 793
- Römpp Lexikon, Lebensmittelchemie, ISBN 3-13-736601-1, Seiten 309-310

## Beschreibung

Die vorliegende Erfindung bezieht sich auf die Verarbeiung eines Lebensmittels mit einer wäßrigen Phase zu einem konfektionierten Lebensmittel, welches enzymatisch aufgeschlossene, sensorisch und/oder pharmakologisch wirksame Pflanzenbestandteile enthält. In erster Linie geht es um gewürzte Lebensmittel unter Verwendung von Kräutern oder anderen würzenden Vegetabilien, aber auch um gefärbte Lebensmittel unter Verwendung von farblich wirksamen Pflanzen, um den Geruchssinn in einer gewünschten Weise ansprechende Lebensmittel unter Verwendung von olfaktorisch wirksamen Pflanzenbestandteilen oder um physiologisch oder pharmakologisch wirksame oder die psychische Verfassung des Konsumenten beeinflussende Lebensmittel unter Verwendung entsprechender Drogenpflanzen. In allen diesen Fällen kommt es darauf an, die Inhaltsstoffe der Gewürze, Kräuter oder Vegetabilien freizusetzen und gleichmäßig im Lebensmittel zu verteilen.

Das ältere Verfahren der Versetzung von Lebensmitteln mit Gewürzen und Kräutern ist das mechanische Zerkleinern, insbesondere das Mahlen derselben und die gleichmäßige Einmischung der Partikel in das Lebensmittel. Beim Mahlen werden die Inhaltsstoffe durch Zerstörung des Zellverbandes sowie eines Teils der Zellen selbst freigesetzt. Ein großer Anteil der Inhaltsstoffe bleibt aber in den aufgemahlenen Pflanzenpartikeln ungenutzt gebunden.

Eine höhere Ausbeute und Nutzung der Inhaltsstoffe wird erzielt, wenn diese zunächst aus den Gewürzen bzw. Vegetabilien extrahiert werden, was mit Lösungsmitteln, Wasserdampf oder Kohlendioxid geschehen kann. Diese Extraktionsverfahren haben eine ausgleichende Wirkung auf die starken Qualitätsschwankungen der Gewürzrohstoffe, sind jedoch mit anderen Nachteilen behaftet.

So werden Oleoresine (= Öle/Harze) vielfach in den Anbauländern selbst hergestellt. Die Inhaltsstoffe sind an Öl gebunden. Herstellungsverfahren ist die Lösungsmittelextraktion. Nach einer groben Vormahlung wird das Zwischenprodukt mit Lösungsmitteln derartig behandelt, daß auch die in noch nicht zerstörten Zellen gebundenen Inhaltsstoffe freigesetzt werden. Im unterschied zu nur gemahlenen Gewürzen ist die Ausbeute höher und die Schwankungsbreite in der Würzstärke ist aeringer. Jedoch löst das Lösungsmittel (z.B. Dichlormethan) auch nicht erwünschte Lipide. Andere Extraktionsverfahren erfordern einen sehr hohen apparativen und energetischen Aufwand.

All diese Fakten sind auch ausschlaggebend dafür, daß sich die Extraktionsmethoden am Markt nicht großflächig durchgesetzt haben. Nachteile gegenüber dem Mahlen von Gewürzen liegen vor allem im Preis für das Endprodukt. Dieser ist für die Lebensmittelindustrie zu hoch, denn bei einem sehr hohen apparativen Aufwand kommen nur relativ geringe Mehrausbeuten an Inhaltsstoffen zustande. Bei den Verfahren mit Lösungsmitteln sind außerdem Gefahren für die Gesundheit der Verbraucher diskutiert worden.

Die Erfindung geht aus von einem Verfahren, bei dem zur Gewinnung der Inhaltsstoffe von in Lebensmitteln zu verwendenden Gewürzen, Kräutern und Vegetabilien diese enzymatisch aufgeschlossen werden. Solche Verfahren sind aus den Druckschriften WO 91/03174, US-PS 2 486 384, DE-OSen 2 104 259 und 1 492 959, EP-A2 0 444 439, FR-OS 2 448 567 oder CH-PS 471 539 bekannt. Hierbei konnten bisher nur Inhaltsstoffe (Öle) gewonnen werden, die in großen Mengen und in nicht flüchtigen Anteilen im Pflanzenmaterial vorlagen.

In der vorgenannten Druckschrift EP-A2 0 444 439 geht es beispielsweise um die Herstellung eines Würzschleims in der Weise, daß durch Zugabe eines zellspaltenden Enzyms zu den wirksamen Pflanzenbestandteilen ein Schleim aus vereinzelten aufgeschlossenen Zellen gewonnen wird, von dem noch die nicht abgebauten Substanzen abgetrennt werden und der dann einem zu würzenden Lebensmittel zugegeben wird.

Ähnliches gilt für ein aus dem US-Patent 3 725 085 bekanntes Verfahren zur Herstellung einer Würzflüssigkeit aus Lauchpflanzen, denen zur Erhöhung der Würzkraft das Enzym Gamma-glutamyl-Transpeptidase zugegeben wird, wobei auch hier die erhaltene Würzflüssigkeit zur späteren Zugabe zu einem Lebensmittel bestimmt ist.

Bei den vorliegend betrachteten Techniken handelt es sich um ein Extraktionsverfahren, wobei hier die Zellwände der Ausgangsstoffe mittels Enzymen aufgelöst und durchlässig gemacht werden und so aus einer Suspension der gewünschte Extrakt gewonnen werden kann. Dabei geht es meist um die Gewinnung von überwiegend flüchtigen Ölen aus pflanzlichen Materialien. Soweit es um die Behandlung von Gewürzen mit zellspaltenden Enzymen geht, waren die Arbeiten bisher nicht erfolgreich, wie in Appl. Microbiol. Biotechnol. 29 (1988), 39/43 oder Forum Mikrobiologie 11 (1988), 484/92 berichtet wird. Aus dem werk von U. Gerhardt "Gewürze in der Lebensmittelindustrie", Behr's Verlag 1990, S. 246 ergibt sich, daß bei den Versuchen der fermentativen Verflüssigung von Gewürzen noch die negativen Ergebnisse überwiegen. Soweit Gewürzinhaltsstoffe extrahiert werden konnten, sind auch die gewonnenen Produkte noch nicht ausreichend lagerstabil. Da die ätherischen Öle als Aromaträger der Gewürze leicht flüchtig sind, ist dieses Resultat erklärlich, denn es gehen unmittelbar nach deren Freisetzung erfahrungsgemäß 30 - 50 %, je nach Pflanzenart, verloren.

Aufgabe der Erfindung ist die Schaffung eines Verfahrens, mit dem die Inhaltsstoffe von Gewürzen, Kräutern und Vegetabilien verbessert in Lebensmitteln zur Wirkung gebracht werden können.

Die Erfindung beruht auf der überraschenden Erkenntnis, daß zellösende Systeme von Enzymen die Wirkung von Gewürzen etc. in wässrigen Lebensmitteln erheblich verbessern, wenn der enzymatische Aufschluß wenigstens überwiegend im Lebensmittel selbst oder im Lebensmittelteil stattfindet und dadurch auch die flüchtigen Anteile wirksam werden. Deshalb wird erfindungsgemäß vorgeschlagen, daß bei der Verarbeitung eines Lebensmittels mit einer wässrigen Phase zu einem konfektionierten, verzehrfertigen Lebensmittel, das enzymatisch aufgeschlossene, sensorisch und/oder pharmakologisch wirksame Pflanzenbestandteile enthält, diese unaufgeschlossen den Enzymen während der Konfektionierung des Lebensmittels in dieses eingemischt werden. Bei dieser Vorgehensweise findet der Aufschluß der Pflanzenbestandteile im Lebensmittel erst durch das Hinzutreten von dessen wässriger Phase statt und auch leicht flüchtige Aromaträger der Gewürze kommen maximal zur Wirkung. Die lysierenden Enzyme sind dabei z.B. Proteasen, Pectinasen, Cellulasen usw., und zwar auch solche, die sich bereits bei anderen pflanzlichen Produkten bewährt haben.

Durch das erfindungsgemäße Vorgehen wird die anzustrebende feine Verteilung der Würzbestandteile im Lebensmittel erreicht und diese bleiben mit den verwendeten Enzymen zusammen oder in unmittelbarer räumlicher Nähe zueinander. Geschieht dies nicht, so kann eine Verdünnung eintreten, die den Aufschlußgrad der Würzbestandteile beeinträchtigt bzw. einen unverhältnismäßig hohen Gewürz- und Enzymeinsatz erfordert.

Um die biokatalytische Wirkung der Enzyme möglichst vollständig zu nutzen, sollen diese unverdünnt an der Pflanzenmatrix angreifen können. Dies wird in weiterer erfinderischer Ausgestaltung dadurch erreicht, daß man die Würzbestandteile bzw. Drogenbestandteile und die Enzyme vor ihrer Zugabe in das Lebensmittel in feiner Verteilung mit einem gemeinsamen, sich im Lebensmittel auflösenden Überzug versieht und so verkapselt. Vorteilhafterweise gehört in jeder Mikrokapsel zu jeder Inhaltsstoffpartikelmenge die zu deren Aufschluß erforderliche und ausreichende Menge an Enzymen. In dieser Form dem Lebensmittel zugegeben, entfalten die Inhaltsstoffe eine maximale Wirkung.

Handelsübliche Enzyme, die für dieses Verfahren in Betracht kommen, gibt es in trockener Form auf Trägerstoffen (z.B. Milchzucker).

Die Wirksamkeit der Enzyme entfaltet sich erst im wässrigen Milieu, da nur hier die notwendige Beweglichkeit, d.h. die Zuführung der Enzymmoleküle an das aufzuschließende Zellgefüge, möglich ist. Je höher die Konzentrationen der beteiligten Partner sind, umso besser ist die Wirkung, da die Wahrscheinlichkeit der Begegnung dann am größten ist.

In großen Verdünnungen, wie sie beispielsweise bei Gewürzzugaben (ca. 0,5 %) in ein Endlebensmittel normal sind, werden die Begegnungswahrscheinlichkeiten mit einem zugegebenen Enzym sehr gering. Da Konzentrationserhöhungen aus Überwürzungs- und Kostengründen nicht möglich sind, muß dafür gesorgt werden, daß die Partner auch nach Einbringen ins Endlebensmittel in räumlicher Nähe sind.

Dies geschieht durch das vorgeschlagene Kapseln der Materialien, wobei Enzymtrockenpräparate mit dem gemahlenen Gewürz vermischt und anschließend im Sprüh-/Agglomerierungsbett mit dem Überzugsstoff überzogen werden. Auf jedem Gewürzpartikel klebt damit die ideale zugehörige Enzymmenge, deren Wirksamkeit erst nach Auflösung im wässrigen Lebensmittel einsetzt. Der Auflösungsprozeß der Überzugsschicht benötigt einige Zeit, so daß eine Freisetzung und damit Verdünnung während des Einrührprozesses noch nicht erfolgen kann.

Geeignete Überzugsstoffe, die sich in der Wasserphase des Lebensmittels auflösen, sind z.B. Saccharide, und zwar insbesondere Zucker, Dextrose, Milchzucker, Stärkeprodukte. Die beteiligten Stoffe sind zunächst im trokkenen Zuckerkristallverbund gehalten. Nach Einmischen der Wirkstoffkapseln in das Lebensmittel und Auflösung der Zucker in dessen wässriger Phase, kann das Enzym die noch benachbart vorliegenden Gewürzpartikel angreifen, ohne vorher durch die Durchmischung bei der Herstellung des Lebensmittels in zur Unwirksamkeit führende Verdünnung zu geraten. Je nach Endlebensmittel können auch andere Kapselsubstanzen verwendet werden, die z.B. öllöslich sind bzw. durch Wärme oder Druck aufgebrochen werden, z.B. Salze, Stärken, Fette oder Eiweißstoffe. Möglich ist auch die Verwendung von Verdickungsmitteln als Überzugsstoff, z.B. Guar, Agar-Agar oder Xanthan.

Gemäß einer Variante des Verfahrens kann es zweckmäßig sein, wenn man den enzymatischen Aufschluß der Würzbestandteile in nur einem Teil des fertigen Lebensmittels beginnen läßt und diesen Teil nach begonnener oder vollendeter Durchwürzung mit dem übrigen Teil zusammengibt. Bei dieser Durchführung des Verfahrens wird eine rezepturgemäß auf die gesamte Lebensmittelmenge bezogene Mischung aus Pflanzenbestandteilen und Enzymen zunächst in einen Teil des Lebensmittels gegeben und nach Beginn des Aufschlusses die Vermischung zum fertigen Lebensmittel durchgeführt. Beispielsweise wird die Wirkmischung erst nach einigen Stunden mit den verbliebenen Produktteilen zur vollständigen Lebensmittelmasse zusammengemischt. Auch diese Vorgehensweise ist geeignet, unerwünschte Trennungen von Würzbestandteilen und Enzymen im Lebensmittel zu vermeiden und dennoch den zumindest überwiegenden Teil des enzymatischen Aufschlusses in das Lebensmittel zu verlagern.

Die Erfindung wird nachfolgend durch die Beschreibung von Ausführungsbeispielen illustriert.

### Beispiel 1:

In einen Frühlingsquark werden 5 g/kg Kräuter (Majoran, Schnittlauch) und 1 g/kg einer Enzymsuspension (Standardmischung) eingerührt. Daneben wird eine Probe mit nur 5 g/kg Kräutermischung hergestellt.
Nach 2 bis 3 Stunden Einwirkzeit bei Raumtemperaturen ergibt der sensorische Vergleich eine um ca. 50 % gesteigerte Würzwirkung im enzymatisch behandelten Produkt.

### Beispiel 2:

Der Versuchsablauf des 1. Beispiels wird wiederholt, nur wird diesmal die Mischung von Kräutern und Enzymen mit Zucker gekapselt. Nach 2 bis 3 Stunden Einwirkzeit ergibt die sensorische Prüfung eine um ca. 100 % gesteigerte Wirkung im behandelten Produkt.

### Beispiel 3:

Bei der Herstellung einer Brühwurst wird eine Gewürzmischung (Pfeffer, Macisblüte, Ingwer) mit 5 g/kg dosiert, gleichzeitig wird 1 g/kg Enzymsuspension (Standardmischung) zugegeben.
Nach dem Brühen ergab die sensorische Prüfung eine um ca. 20 % gesteigerte Würzwirkung bei der enzymbehandelten Probe gegenüber einer mit der gleichen Menge Gewürzmischung dosierten Probe ohne Enzymlösung.

### Beispiel 4:

Der Versuch gemäß Beispiel 3 wurde in der Weise wiederholt, daß eine in hochschmelzenden Fetten gekapselte Gewürz/Enzymmischung verwendet wurde. Es wurde eine um ca. 50 % gesteigerte Würzwirkung festgestellt.

### Beispiel 5:

Zu einer Frikadellenrezeptur gehört 20 % Fett (Speck vom Schwein) und 15 % Wasser. Diesem Endproduktteil werden bei 40°C mit 5 g/kg Endprodukt eine Gewürzmischung und 1 g Enzymmischung, bezogen auf das Endprodukt, zugegeben. Nach 2-stündigem Rühren wird diese Mischung rezepturgemäß zur Herstellung der Frikadellen verwendet.

Der Gewürzeindruck der nach dieser Methode erhaltenen Frikadellen ist etwa 30 % stärker als bei der klassischen Direktzugabe der Gewürzmischung zur Frikadellenmasse.

### Beispiel 6:

Das Verfahren nach Beispiel 5 wird wiederholt unter Verwendung einer gekapselten Gewürz-Enzymmischung. Der Gewürzeindruck ist dann im Endprodukt um etwa 50 % gegenüber der klassischen Methode gesteigert.

### Beispiel 7:

Zu einem als Tiefkühlkost herzustellenden Fertiggericht mit Fleischanteilen gehört eine gewürzte Sauce. Wird die Würzung bei Aufgabe der Sauce mit einer gekapselten Gewürz-/Enzymmischung vorgenommen, erhöht sich der sensorische Gewürzeindruck gegenüber einer normalen Gewürzzugabe um ca. 30 %.

### Beispiel 8:

Ein wäßriges Enzym-/Kräuter-Gemisch wird intensiv mit Speiseöl durchmischt. Nach etwa 2-stündiger Einwirkzeit kann die Ölphase durch Zentrifugation abgetrennt und direkt als Küchenwürzung für Speisen aller Art eingesetzt werden.

### Beispiel 9:

Eine wäßrige Suspension von Paprikapulver und Enzymen wird mit Speiseöl versetzt und intensiv durchmischt. Nach etwa 2-stündiger Einwirkzeit kann nach Abtrennung durch Zentrifugation eine leuchtend rote Ölphase gewonnen werden, die direkt als färbendes Lebensmittel in Speisen aller Art eingesetzt werden kann.

### Beispiel 10:

1 kg grob vermahlene Nelkenstiele werden mit 2 l Wasser und 1 kg Sojaöl versetzt. Nach Zugabe von 10 g eines Zellulasen-/Proteasengemisches (suspendiert) wird die gesamte Mischung unter Luftabschluß beo 40°C zwei Stunden intensiv gerührt. Nach Absetzen der Ölphase kann dekantiert oder zentrifugiert werden. Die Ölphase enthält dann etwa 40 g/kg reines Eugenol, das als Lebensmittel oder in der Pharmazie verwendet werden kann.

## Patentansprüche

1. Verfahren zur Verarbeitung eines Lebensmittels mit einer wäßrigen Phase zu einem konfektionierten Lebensmittel, das enzymatisch aufgeschlossene, sensorisch und/oder pharmakologisch wirksame Pflanzenbestandteile enthält,
dadurch gekennzeichnet, daß die unaufgeschlossenen Pflanzenbestandteile zusammen mit den Enzymen während der Konfektionierung in das Lebensmittel eingemischt werden.

2. Verfahren nach Anspruch 1, dadurch gekennzeichnet, daß die Pflanzenbestandteile nach einer mechanischen Zerkleinerung, z.B. Vermahlung, mit den Enzymen zusammengegeben werden.

3. Verfahren nach Anspruch 1 oder 2, dadurch gekennzeichnet, daß man die Pflanzenbestandteile und die Enzyme zunächst in einen Teil des Lebensmittels zugibt und nach Beginn des Aufschlusses die Vermischung zum fertigen Lebensmittel durchführt.

4. Verfahren nach einem oder mehreren der vorhergehenden Ansprüche, dadurch gekennzeichnet, daß die Pflanzenbestandteile und die Enzyme vor ihrer Zugabe in das Lebensmittel zusammen durchmischt und in feiner Verteilung in einem Überzug verkapselt werden.

5. Verfahren nach Anspruch 4, gekennzeichnet durch Mono-, Di- oder Poly-Saccharide als Überzugsstoffe.

6. Verfahren nach Anspruch 4, gekennzeichnet durch Verdickungsmittel, z.B. Guar, Agar-Agar, Xanthan als Überzugsstoff.

7. Verfahren nach Anspruch 4, gekennzeichnet durch Salze als Überzugsstoff.

8. Verfahren nach Anspruch 4, gekennzeichnet durch Fette als Überzugsstoff.

9. Verfahren nach Anspruch 4, gekennzeichnet durch Eiweißstoffe als Überzugsstoff.

## Claims

1. Method for processing a foodstuff having an aqueous phase to form a prepared foodstuff which contains enzymatically broken-down, mouth feel and/or pharmacologically effective vegetable constituents, characterised in that the non broken-down vegetable constituents are mixed into the foodstuff together with the enzymes during the preparation.

2. Method according to claim 1, characterised in that the vegetable constituents are added together with the enzymes after a mechanical comminution, for example grinding.

3. Method according to claim 1 or 2, characterised in that the vegetable constituents and the enzymes are first added to a portion of the foodstuff, and after the start of breaking-down, mixing to form the finished foodstuff is carried out.

4. Method according to one or more of the preceding claims, characterised in that the vegetable constituents and the enzymes are mixed thoroughly together before they are supplied to the foodstuff and, in fine distribution, are encapsulated in a coating.

5. Method according to claim 4, characterised by monosaccharides, disaccharides or polysaccharides as coating substances.

6. Method according to claim 4, characterised by thickening agents, for example guar, agar-agar, xanthan, as the coating substance.

7. Method according to claim 4, characterised by salts as the coating substance.

8. Method according to claim 4, characterised by fats as the coating substance.

9. Method according to claim 4, characterised by proteins as the coating substance.

## Revendications

1. Procédé de transformation d'un aliment contenant une phase aqueuse en un aliment conditionné contenant des composants végétaux à activité sensorielle et/ou pharmacologique, décomposés par voie enzymatique, caractérisé par le fait que les composants végétaux non décomposés sont mélangés en même temps que les enzymes avec l'aliment pendant le conditionnement de celui-ci.

2. Procédé selon la revendication 1, caractérisé par le fait que les composants végétaux sont mélangés avec les enzymes après avoir été soumis à une réduction de taille par des moyens mécaniques, par exemple par broyage.

3. Procédé selon la revendication 1 ou 2, caractérisé par le fait que l'on ajoute les composants végétaux et les enzymes d'abord dans une fraction de l'aliment et que le mélange donnant l'aliment définitif se fait seulement après le début de la décomposition.

4. Procédé selon une ou plusieurs des revendications précédentes, caractérisé par le fait que les composants végétaux et les enzymes sont mélanges les uns avec les autres et encapsulés par un agent d'enrobage avant d'être incorporés dans l'aliment.

5. Procédé selon la revendication 4, caractérisé par le fait que l'on utilise comme agents d'enrobage des mono-, di- ou polysaccharides.

6. Procédé selon la revendication 4, caractérisé par le fait que l'on utilise comme agent d'enrobage des agents épaississants, par exemple du guar, de l'agar-agar et du xanthane.

7. Procédé selon la revendication 4, caractérisé par le fait que l'on utilise des sels en tant qu'agent d'enrobage.

8. Procédé selon la revendication 4, caractérisé par le fait que l'on utilise des matières grasses en tant qu'agent d'enrobage.

9. Procédé selon la revendication 4, caractérisé par le fait que l'on utilise des protéines en tant qu'agent d'enrobage.
